# EUROPÄISCHE PATENTSCHRIFT

(11) **EP 2 282 602 B1**
(45) Veröffentlichungstag und Bekanntmachung des Hinweises auf die Patenterteilung: **25.01.2012**
(21) Anmeldenummer: 10169840.5
(22) Anmeldetag: 16.07.2010
(51) Int. Cl.: H04W 84/20, H04W 24/02, H04W 16/22, H04W 52/02

(54) **Verfahren und Vorrichtung zur Konfiguration eines Funknetzwerkes**
Method and device for configuring a radio network
Procédé et dispositif destinés à la configuration d'un réseau radio

(30) Priorität: 16.07.2009 DE 102009033553
(43) Veröffentlichungstag der Anmeldung: 09.02.2011
(73) Patentinhaber: Techem Energy Services GmbH, 65760 Eschborn (DE)
(72) Erfinder: Simon, Winfried, 64579, Gernsheim (DE)
(74) Vertreter: KEIL & SCHAAFHAUSEN Patentanwälte

(56) Entgegenhaltungen:
- US-B1- 7 035 240
- JOHANSSON T ET AL: "REDUCING INTERFERENCE IN AD HOC NETWORKS THROUGH TOPOLOGY CONTROL" DIALM-POMC'05. PROCEEDINGS OF THE 2005 JOINT WORKSHOP ON FOUNDATIONS OF MOBILE COMPUTING. COLOGNE, GERMANY, SEPT. 2, 2005; [PROCEEDINGS OF THE WORKSHOP ON FOUNDATIONS OF MOBILE COMPUTING], NEW YORK, NY : ACM, US LNKD- DOI:10.1145/1080810.1080815, 2. September 2005 (2005-09-02), Seiten 17-23, XP001508060 ISBN: 978-1-59593-092-7
- KYAMAKYA K ET AL: "Cross-layer optimization, especially combination of channel estimation and position determination in multihop wireless networks (cellular and adhoc)" VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US LNKD- DOI:10.1109/VETECF.2003.1285282, Bd. 3, 6. Oktober 2003 (2003-10-06), Seiten 1537-1543, XP010702659 ISBN: 978-0-7803-7954-1
- PENG CHENG ET AL: "Energy-aware node placement in wireless sensor networks" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, PISCATAWAY, NJ, USA LNKD- DOI:10.1109/GLOCOM.2004.1378943, Bd. 5, 29. November 2004 (2004-11-29), Seiten 3210-3214, XP010758313 ISBN: 978-0-7803-8794-2

## Beschreibung

Die Erfindung betrifft ein Verfahren und eine Vorrichtung zur Konfiguration eines insbesondere hierarchisch aufgebauten Funknetzwerkes gemäß dem Oberbegriff der Ansprüche 1 und 12, bei denen in das Funknetzwerk integrierte Teilnehmergeräte miteinander kommunizieren.

Die Erfindung bezieht sich insbesondere auf ein Funknetzwerk zur Verbrauchsdatenerfassung, das besondere Anforderungen an die Organisation des Netzwerkes stellt. Eine ganz wesentliche Anforderung gründet darauf, dass die Teilnehmergeräte zumindest teilweise batteriebetrieben sind und der Betrieb über einen langen Zeitraum (bspw. in der Größenordnung von 10 Jahren) gewährleistet werden muss. Auch sind in ein derartiges Funknetzwerk meist Teilnehmergeräte mit verschiedenen Aufgaben und/oder unterschiedlichem Aufbau integriert. Sogenannte Endgeräte dienen häufig dazu, Verbrauchswerte zu erfassen und an eine zentrale Stelle weiterzuleiten, welche die Verbrauchswerte oder sonstigen Informationen sammelt und für eine zentrale Ablesung zur Verfügung stellt. Diese zentrale Stelle arbeitet also als Datensammler, wobei der die zentrale Ablesung ermöglichende Datensammler meist ein besonders ausgezeichneter Datensammler ist. Dieser kann beispielsweise in das nachfolgend auch als Master-bezeichnete Mastergerät mit integriert sein, welches das Funknetzwerk organisiert. Dieses Gerät ist häufig an ein Stromnetz angeschlossen, um den zusätzlichen Energiebedarf decken zu können. Um die Funkleistung der einzelnen Endgeräte zu begrenzen sind häufig weitere Datensammler vorgesehen, welche die Funktelegramme der Endgeräte empfangen und wieder aussenden, um sie an den ausgezeichneten Datensammler weiter zu leiten. In einem derartigen Funknetzwerk kommunizieren Endgeräte also mit einem oder mehreren Datensammlern oder auch direkt mit einem Master sowie Datensammler miteinander und mit einem Master.

Die Endgeräte sind vorzugsweise einem Datensammler derart zugeordnet, dass von den Endgeräten ausgesendete Funktelegramme nur von diesem einen ausgewählten Datensammler ausgewertet und weiterverarbeitet werden. Die Datensammler kommunizieren auch untereinander, wobei es sowohl möglich ist, dass die von einem Datensammler ausgesendeten Funktelegramme durch mehrere Datensammler ausgewertet und gegebenenfalls weitergesendet werden. In einer anderen Ausführungsform ist es auch möglich, dass einem Datensammler jeweils ein anderer Datensammler zugeordnet ist, der die Datentelegramme weiterleitet, um sie letztlich einem bevorzugten bzw. ausgezeichneten Datensammler zuzuleiten, beispielsweise dem Master oder einem Datensammler, bei dem die erfassten Messwerte ausgelesen werden. Es ist jedoch darauf hinzuweisen, dass die Endgeräte und die Datensammler nicht notwendiger Weise unterschiedlich aufgebaute Geräte sein müssen. Insbesondere ist es möglich, alle oder die meisten Teilnehmergeräte des Funknetzes gleich aufzubauen und jeweils entsprechend ihren Aufgaben und ihrer Funktion einzurichten.

Insbesondere können die Endgeräte Messgeräte wie Wasserzähler, Wärmezähler oder Heizkostenverteiler sein, welche den Verbrauch der Nutzer in einer Liegenschaft erfassen. Der Master, der beispielsweise ein mit besonderen Programmmitteln in seiner Recheneinheit ausgestatteter Datensammler sein kann, organisiert das Funknetzwerk. Dazu kann er insbesondere die Zuordnung der Endgeräte zu Datensammlern und/oder die Kommunikationswege der Datensammler hin zu dem Master und/oder einem bevorzugten bzw. ausgezeichneten Datensammler definieren. Endgeräte oder Datensammler können auch zusätzliche Aufgaben übernehmen, bspw. zur wärmebedarfsadaptiven Heizungsregelung an eine herkömmliche Heizungssteuerung angeschlossen sein.

Bei der Verbrauchswerterfassung erfassen Messgeräte, wie Wasserzähler, Wärmezähler und Heizkostenverteiler den Verbrauch der Nutzer in einer Liegenschaft. Diese zumeist elektronischen Erfassungsgeräte werden zunehmend mit Funk-Schnittstellen zur Fernauslesung ausgestattet. Sehr verbreitet sind Systeme, bei denen der Ableser zum Beispiel einmal jährlich mit einem mobilen Empfänger in die Wohnung oder Liegenschaft geht und die im Rahmen dieser Anmeldung als Endgeräte bezeichneten Messgeräte per Funk abliest. Bei anderen Anwendungen geht man dazu über, Datensammler im Haus stationär zu montieren. Diese Datensammler sammeln die Informationen der Endgeräte, die ihnen zumeinst als Funktelegramme übermittelt werden. Diese Daten leiten sie ebenfalls per Funk an eine zentrale Stelle im Haus weiter, beispielsweise einen Master(-Datensammler) oder einen bevorzugten Datensammler. Von dort aus werden die Daten dann häufig über ein öffentliches Kommunikationsnetz an einen Leitstand zur weiteren Verarbeitung abgegeben. Die Erfindung betrifft den zweiten geschilderten Fall der Ablesung, bei dem die Endgeräte ihre Funktelegramme an in der Liegenschaft installierte Datensammler aussenden, die dann untereinander in einem stationären Funknetzwerk zur Verbrauchsablesung kommunizieren.

Stationäre Funknetzwerke, die zur Verbrauchsdatenerfassung verwendet werden sollen, müssen sehr kostengünstig sein, da die Anwendung sonst unwirtschaftlich ist. Der Betrieb des Funknetzwerkes kann in Beschaffungskosten, Installation und Betrieb aufgeteilt werden. Die Komponenten müssen preiswert beschaffbar sein, was bei den verfügbaren Komponenten kein Problem darstellt. Ferner sollte die Installation in bestehenden Gebäuden kostengünstig realisiert werden können. Da die Datensammler für ein stationäres Funknetzwerk etwa gleich verteilt im Haus angebracht werden müssen, um eine gleichmäßige Abdeckung des Raumes zu erreichen, ist eine Batterieversorgung dieser Datensammler notwendig. An den möglichen Stellen zur Installation ist normalerweise keine Netzversorgung verfügbar. Die Stromversorgung der Geräte erfolgt durch Batterien mit einer Laufzeit von 5 bis 10 Jahren. Der Stromverbrauch der verwendeten Funktechnologie hat demnach eine hohe Bedeutung. Im laufenden Betrieb muss es möglich sein, Endgeräte zu tauschen, beispielsweise im Falle eines Defektes oder nach Ablauf der Eichfrist. Die getauschten Geräte müssen dann in das Funknetzwerk eingebunden und dort verwaltet werden können.

Daher wird insbesondere im Rahmen der Verbrauchswerterfassung, aber auch beispielsweise im Bereich der Hausautomation, ein Funknetzwerk benötigt, welches mit extrem wenig Strombedarf in den Komponenten auskommt. Eine weitere wesentliche Anforderung ist es, den Strombedarf der einzelnen Komponenten anzugleichen, da das Gesamtnetzwerk nur funktioniert, wenn sich alle Teilnehmer des Funknetzwerkes in Betrieb befinden. Es hilft dem Gesamtsystem nichts, wenn in dem überwiegenden Teil der Komponenten noch Energiereserven vorhanden sind, einige beispielsweise zentrale Komponenten jedoch ausfallen.

Derartige stationäre Funknetzwerke sind unter dem Begriff "Sensornetzwerk" bekannt. Aufgrund des zunehmenden Bedarfs, Messwerte auch für andere Anwendungen drahtlos zu erfassen, und aufgrund der Verfügbarkeit von preiswerten Elektronikkomponenten mit uni- und/oder bidirektionalen Funkschnittstellen hat sich das Thema zu einem nennenswerten Forschungsschwerpunkt entwickelt. Im Fokus der Forschungsgruppen stehen dabei sogenannte "vermaschte" Netzwerke, welche Daten von Station zu Station weiterleiten. Der einzelne Netzwerkknoten kennt dabei die Topologie des Gesamtnetzwerkes nicht. Eine besondere Form dieser vermaschten Netzwerke stellen die sogenannten "ad-hoc-Netzwerke" dar. Diese ad-hoc-Netzwerke bauen sich selbstständig auf und konfigurieren sich eigenständig. Prominente, kommerzielle Vertreter dieser Technologien sind beispielsweise ZigBee oder Z-Wave. Vorbild bei der Definition der Struktur dieser Netzwerke war meist das Internet. Vermaschte Netzwerke erfordern Netzwerkknoten mit erheblicher Intelligenz. So muss jeder Netzwerkknoten sämtliche erforderlichen Dienste beherrschen und zur Verfügung stellen. Jeder Netzwerkknoten muss in der Lage sein, neue Teilnehmer des Funknetzwerkes zu erkennen, aufzunehmen und an dem Funknetzwerk anzumelden. Auch muss er sämtliche Routing-Funktionen beherrschen. Um mit dieser Technologie sicher umzugehen werden fertig einsetzbare Software-Komponenten, sogenannte Kommunikationsstacks, zur Verfügung gestellt, welche in die Zielapplikationen eingebunden werden können. Diese Software-Komponenten benötigen jedoch einen erheblichen Speicherplatz, was die Kosten der Einzelkomponenten in die Höhe treibt und daher für Anwendungen wie die Verbrauchsdatenerfassung nur bedingt geeignet ist. Ein ZigBee-Stack benötigt beispielsweise einen Speicher größer 80 kByte Flash. Weit gravierender ist jedoch der Nachteil solcher Systeme bezogen auf den Stromverbrauch. Ein vermaschtes Netzwerk erfordert zusätzlichen Kommunikationsaufwand für die Systemdienste, der den Energiebedarf merklich erhöht. Durch die dem lokalen Netzwerkknoten unbekannte Netzwerktopologie kann das Routing nur sehr eingeschränkt optimiert werden, so dass es auch deswegen zu einem erheblichen Overhead an Kommunikation kommt. Eine weitere große Schwierigkeit ist, dass der Strombedarf einzelner Netzwerkknoten nicht vorhergesagt werden kann und schon deshalb der sichere Betrieb über lange Zeit mit Batterien nicht möglich ist. Im Gegensatz zu straff organisierten Netzwerken können daher vermaschte Netzwerke nicht stromoptimal geführt werden.

Als besser geeignet haben sich deshalb in der Vergangenheit Funknetzwerke erwiesen, welche streng hierarchisch organisiert sind und den Strombedarf durch Minimierung der Overhead-Kommunikation begrenzen. Besonders Strom sparend werden diese Systeme, wenn sie synchron betrieben werden. Bei dieser Betriebsart verabreden sich Sender und Empfänger, zu gewissen Sendezeitpunkten Kontakt aufzunehmen. Dies hat den Vorteil, dass in der Zwischenzeit Empfänger und Sender abgeschaltet werden können und der Stromverbrauch der Komponenten drastisch sinkt. Im Extremfall arbeitet das gesamte Netzwerk synchron, d.h. jeder Teilnehmer hat eine Liste, wann er sich mit welchem Partner in Verbindung setzen kann, und befindet sich ansonsten in einem Standby-Modus, aus dem er ggf. aufgeweckt werden kann. Diese synchrone Betriebsweise minimiert auch die Gefahr von Kollisionen.

Ein Master, welcher das Funknetz organisiert, kann beispielsweise gleichzeitig als ausgezeichneter Datensammler eingerichtet sein, der die Daten mittels einer Mobilfunkverbindung (GSM, GPRS, UMTS oder dergleichen) oder einer anderen "öffentlichen" Verbindung (beispielsweise das kabelgebundene Telefonnetz) an einen Leitstand überträgt.

Bisher ist das Problem einer ungleichmäßigen Belastung einzelner Komponenten aber auch in streng hierarchisch organisierten Funknetzwerken weitgehend ungelöst. Aufgrund der räumlichen Gegebenheiten können einzelne Teilnehmer des Funknetzwerkes nur mit bestimmten anderen Teilnehmern kommunizieren. Dadurch ergeben sich immer Engpässe in Form eines erhöhten Energiebedarfs insbesondere bei den Teilnehmern, die funktechnisch besonders günstig angeordnet sind. Diese Komponenten werden durch die Weiterleitungs-Kommunikation stark belastet.

Aus der EP 1 180 909 A1 ist ein Verfahren zur Erfassung von Daten dezentral angeordneter Datenerfassungsgeräte bekannt, welche die Daten erfassen und über eine Zwischenstation an eine zentrale Datensammelstelle weiterleiten. Die Datenerfassungsgeräte werden den Zwischenstationen automatisch zugeordnet, wobei zum Aufbau des Netzwerks zwischen mehreren Zwischenstationen bidirektionale Kommunikationswege bestehen und sich die mehreren Zwischenstationen zum Aufbau eines Netzwerkes Geräteadressen und eine Netzwerkadresse selbstständig zuordnen. Dadurch wird der Installationsaufwand reduziert. Allerdings besteht nach wie vor das Problem, dass das Netzwerk nicht energieoptimiert ist.

Die US 7,035,240 B1 beschreibt ein energieeffizientes Funkkommunikationsnetzwerk mit einer Vielzahl von Netzwerkkonten, die Daten sammeln und schließlich zu einer Basisstation weiterleiten. Dazu werden einzelne Netzwerkcluster mit mehreren Netzwerkknoten gebildet, von denen ein Netzwerkknoten als Clusterkopf arbeitet, der u.a. die Verwaltung der Netzwerkknoten und die Weiterleitung an die Basisstation übernimmt. Nach einer gewissen Betriebszeit wird dann ein anderer Netzwerkknoten als Clusterkopf installiert. Hierdurch wird die Energiebilanz der einzelnen Knoten aneinander angeglichen und die Lebenszeit des System erhöht. Allerdings bleiben individuelle Lasten der einzelnen Netzwerkknoten unberücksichtigt. Außerdem erfordert der regelmäßige Wechsel von Clusterköpfen einen nicht hohen Verwaltungs- und Kommunikationsaufwand, der die Energiebilanz auch beeinträchtigt.

In der EP 1 835 668 B1 wird ein Verfahren zur Übertragung von Daten aus mehreren Sensorknoten zu einem Überwachungsknoten offenbart, wobei ein matehischer Graph für die Sensorkonten und den Überwachungsknoten erzeugt wird, deren Kanten die einzelnen Knoten basierend auf dem Abstand zwischen den jeweiligen Knoten verbinden. Für jeden Sensorknoten wird eine Energiepegel im Sinne eines Energieverbrauchs gebildet und basierend darauf sowie einer Möglichkeit zur Datenaggregation jeder Kante eine Gewichtung zugewiesen. Anschließend wird ein Routing-Baum definiert derart, dass die Gesamtgewichtung des Routing-Baums minimiert, d.h. energieoptimiert, ist. Dieser Routing-Baum wird dann den einzelnen Sensorknoten zugewiesen. Durch das Arbeiten mit Wahrscheinlichkeiten wird aber die konkrete energetische Belastung eines Sensorknotens u.U. nicht ausreichend belastet mit der Folge, dass dieser zu stark belastete Sensorknoten einen Servicefall auslöst, wenn die Batterie zur Energieversorgung leer ist.

In dem Aufsatz T. Johansson, "Reducing Interference in Ad hoc Networks through Topology Control", wird ein Algorithmus zur Reduktion des Energieverbrauchs eines kabellosen ad-hoc-Netzwerks offenbart. Dazu wird die Interferenz in dem Netzwerk gemessen und diese durch eine topologische Kontrolle reduziert. In einem Vergleichsalgorithmus werden Informationen der einzelnen Netzwerkknoten buw. Teilnehmergeräte über ihre Umgebung gesammelt.

Der Aufsatz K. Kyamaka et.al., "Cross-layer Optimisation, especially Combination of Channel Estimation and Position Determination in Multihop Wireless Networks", beschreibt eine Cross-Layer-Optimierung in einem kabellosen Multihop Netzwerk. Es werden Information aus anderen Schichten des Netzwerkes genutzt, um die Effizienz der Prozesse in der physikalischen Schicht zu steigern, insbesondere durch Verwendung der Positionsinformation der einzelnen Netzwerkknoten und Teilnehmergeräte und eine Kanalschätzung (Simulation) der Qualität der technischen Übertragungskanäle.

Aus der Veröffentlichung P. Cheng et.al.m, "Energy-aware Node Placement in Wireless Sensor Networks", ist ein Verfahren zur Ermittlung einer optimalen Platzierung von Netzwerkknoten bekannt, um einen gleichmäßigen Energieverbrauch aller Netzwerkknoten und damit eine maximale Lebensdauer des Netzwerks zu erreichen.

Aufgabe der vorliegenden Erfindung ist es daher, ein zuvor beschriebenes, insbesondere hierarchisch aufgebautes und durch einen Master organisiertes Funknetzwerk derart weiterzubilden, dass die einzelnen Komponenten bzw. Teilnehmer des Funknetzwerkes möglichst gleichmäßig belastet werden.

Diese Aufgabe wird erfindungsgemäß mit den Merkmalen der Ansprüche 1 und 12 gelöst.

Bei dem eingangs definierten, vorbeschriebenen Verfahren ist dazu vorgesehen, dass in einem als Optimierergerät ausgebildeten Organisator, beispielsweise dem Mastergerät (nachfolgend auch als Master bezeichnet) oder einem anderen ausgezeichneten Teilnehmergerät des Funknetzwerkes, von an dem Funknetzwerk beteiligten Teilnehmergeräten, insbesondere also Endgeräten und/oder Datensammlern, Informationen über die Topologie des Funknetzwerkes und die Funklast der einzelnen Teilnehmergeräten gesammelt werden und auf Basis der erhaltenen Informationen über vorzugsweise in dem Organisator eine Simulation des Funknetzwerkes, insbesondere der Topologie des Funknetzwerkes unter Berücksichtung der Last (bspw. Häufigkeit und/oder Länge der Funktelegramme), durchgeführt wird. Die Simulation des Funknetzwerkes beinhaltet eine Voraussage der Betriebsdauer der einzelnen Teilnehmergeräte des Funknetzwerkes, insbesondere in einem der Realität entsprechenden bzw. möglichst nahe kommenden Betrieb. Das Ergebnis dieser Simulation wird durch den Master des Funknetzes verwendet, der abhängig von der Simulation des Funknetzwerkes das Funknetzwerk organisiert. Vorzugsweise ist auch der Organisator Teil des Funknetzwerkes und kann beispielsweise in den Master mit integriert sein.

Durch die erfindungsgemäße Simulation der Topologie und des Betriebs des Funknetzwerkes ist es möglich, die wahrscheinliche Belastung der einzelnen Teilnehmer des Funknetzwerkes im Vorfeld zu ermitteln, und durch eine geeignete Organisation insbesondere der Hierarchie und der verwendeten Kommunikationswege des Funknetzwerkes die Belastung der einzelnen Komponenten bzw. Teilnehmergeräte aneinander anzugleichen.

Bevorzugt findet die vorgeschlagene Erfindung Anwendung bei Funknetzwerken mit mindestens zwei verschiedenen an dem Funknetz teilnehmenden Geräten, nämlich einem Endgerät, das als Messgerät oder dergleichen gewünschte Informationen erfasst und mittels eines Funktelegramms aussendet, sowie einem Datensammler, der die Funktelegramme der Endgeräte empfängt und zur Weiterleitung an einen Master oder ausgezeichneten Datensammler wieder aussendet.

Gemäß einer bevorzugten Ausführungsform der Erfindung sind die Kriterien bei der Simulation dergestalt, dass die Topologie des Funknetzwerkes im Hinblick auf eine Minimierung des Strombedarfs im gesamten Funknetzwerk und/oder auf eine Gleichverteilung der Last auf alle (möglichen, d.h. konfigurierbaren) Komponenten, d.h. insbesondere die Datensammler, optimiert wird. Da eine alleinige Optimierung des Strombedarfs des gesamten Funknetzwerkes auch dazu führen kann, dass lediglich eine oder wenige Komponenten stark belastet werden, was zu einem schnellen Austauschbedarf der Batterien dieser Komponenten führen würde, ist eine Kombination dieser beiden Optimierungskriterien besonders vorteilhaft.

Als Maß für die Last einer Komponente bzw. eines Teilnehmergeräts des Funknetzwerkes können die Anzahl und/oder Länge der einzelnen Funkübertragungen, die benötigte Sendeleistung und die Qualität der Funkstrecken neben gegebenenfalls weiteren Kriterien herangezogen werden. Bei einer Gleichverteilung der Last ist es sinnvoll, neben den absoluten Energiebedarfswerten auch die aktuell verfügbare Batteriekapazität der jeweiligen Teilnehmer des Funknetzwerkes zu berücksichtigen. Vorzugsweise sind bei dem erfindungsgemäß betroffenen Funknetzwerk die Endgeräte und die Datensammler nämlich als batteriebetriebene Geräte ausgebildet, wobei einzelne Endgeräte oder Datensammler, insbesondere ein Master(-Datensammler) erfindungsgemäß auch als netzbetriebene Komponente vorgesehen sein kann. Eine Gleichverteilung der Last kann daher auch eine gezielte Umverteilung von einem Teilnehmer mit nur noch geringer Batteriekapazität auf andere Teilnehmer mit mehr Batteriekapazität bedeuten, so dass zwar eine ungleiche Zahl an Datenübertragungen, aber eine Gleichverteilung der mit der zur Verfügung stehenden Batteriekapazität erreichbaren Lebensdauer der Komponenten erreicht wird.

Um im Rahmen der Simulation eine Optimierung der Topologie des Funknetzwerkes zu erreichen, ist gemäß einer besonders bevorzugten Ausführungsform des vorgeschlagenen Verfahrens vorgesehen, die zur Organisation zur Verfügung stehenden Einflussgrößen zu variieren und jeweils die Last der einzelnen Komponenten zu ermitteln. Auf diese Weise kann iterativ eine Optimierung der Gesamttopologie des Funknetzwerkes erreicht werden. Die zur Organisation des Funknetzwerkes zur Verfügung stehenden Einflussgrößen sind insbesondere das Ausnutzen redundanter Kommunikationswege, eine Variation der Sendeleistung, eine Variation der Zuordnung der verschiedenen Teilnehmergeräte, insbesondere Endgeräte zu Datensammlern, sowie der Aufbau der Hierarchie. Erfindungsgemäß können aber auch weitere Einflussgrößen, beispielsweise die Anzahl oder der Inhalt der Datentelegramme, soweit dies beeinflussbar ist, variiert werden.

Um auf Änderungen in der Topologie des Netzwerkes reagieren zu können, wird gemäß einer bevorzugten Weiterbildung der Erfindung vorgeschlagen, die Simulation in vorgebbaren Zeitabständen und vorzugsweise mit den jeweils aktuell gesammelten Daten zu wiederholen. Erfindungsgemäß können Daten über die Topologie des Funknetzwerkes während der laufenden Übertragung ständig mit erfasst und gesammelt werden, insbesondere soweit diese Informationen im Rahmen des ordentlichen Betriebs ohnehin anfallen und die Auswertung nur einen geringen Energiemehrbedarf erfordert. Natürlich ist es auch möglich, für eine Simulation eine gesonderte Messwerterhebung über die Topologie des Funknetzwerkes durchzuführen. Ferner können Daten über die Häufigkeit und die Länge der Funktelegramme einzelner Teilnehmergeräte mit erfasst werden. Diese Daten können jedoch auch a priori in dem Optimierer vorgegeben sein oder bspw. als in den Funktelegrammen der einzelnen Geräten mit übertragene Informationen gesammelt werden. Wenn die Daten nicht a priori fest vorgegeben sind, ist eine nachträgliche Änderung des Funknetzwerks, bspw. durch Ergänzung neuer Teilnehmergeräte, besonders einfach durchführbar.

Der Zyklus, in dem die Simulation wiederholt wird, kann erfindungsgemäß angepasst werden, wobei je nach Einsatzzweck die Zeitabstände einen Tag, eine Woche, einen Monat, ein Jahr betragen können. Je nach Anwendung können also beliebige Zeitabstände vorgesehen werden. Erfindungsgemäß können die Zeitabstände zwischen einer Simulation auch in Abhängigkeit möglicher Änderungen der Topologie bei vorhergehenden Simulationen definiert werden. Sofern bei vorhergehenden Simulationen über einen längeren Zeitraum keine Änderung der Topologie stattgefunden hat, kann der Abstand zur nächsten Simulation erfindungsgemäß verlängert werden. Nach einer erfolgten Änderung der Topologie werden die Zeitabstände dann zunächst wieder verringet, bis sich über längere Zeit die Topologie des Funknetzwerkes nicht geändert hat.

Zur Durchführung der Simulation und insbesondere zur für die Simulation notwendigen Messwerterhebung, können alle Datensammler und/oder alle Endgeräte, d.h. alle Teilnehmergeräte des Funknetzwerkes oder eine definierte Auswahl davon, in den Betriebsmodus versetzt werden. Dies bedeutet, dass die in den Betriebsmodus versetzten Geräte sämtlich Daten- bzw. Funktelegramme aussenden und empfangen. Die Empfangsfeldstärke der empfangenen Funktelegramme wird für alle Teilnehmer des Funknetzwerkes, d.h. insbesondere Datensammler und/oder Endgeräte, gemessen. Bei unterschiedlichen Teilnehmergeräten, bspw. Endgeräten und Datensammlern, findet das Erfassen der Feldstärken vorzugsweise derart statt, dass zunächst alle Datensammler Funktelegramme aussenden und die Endgeräte erst in einem zweiten Simulationsschritt Funktelegramme aussenden. Alle Geräte senden für die Messung der Empfangsfeldstärke vorzugsweise mit voller Sendeleistung, so dass die erhobenen RSSI-Werte zur Empfangsfeldstärke gut vergleichbar sind. Insbesondere werden Werte zur Empfangsfeldstärke für alle Funkstrecken gesammelt und zusammengeführt, beispielsweise in einer Tabelle. Nach Beendigung der Datensammlung können alle Daten ggf. noch an den Master oder Optimierer übertragen werden.

Es hat sich als besonders vorteilhaft herausgestellt, dass bei der Simulation bzw. Optimierung insbesondere aus den gemessenen Empfangsfeldstärken die für eine Funkstrecke zwischen zwei Teilnehmern des Funknetzwerkes erforderliche Sendeleistung berechnet wird. Diese kann für jede Funkstrecke in eine vorzugsweise normierte Tabelle eingetragen werden, die zentral in dem Optimierer oder Datensammler zur Verfügung steht. Diese Berechnung kann sowohl in dem Master oder Optimierer durchgeführt werden als auch jeweils in einem Datensammler selbst. Damit kann die erforderliche Sendeleistung in eine für die Funkstrecke insgesamt erforderliche Leistung umgerechnet werden, die eine für alle Teilnehmer des Funknetzwerkes normierte Größe darstellt, so dass anhand dieser normierten Größe eine Optimierung durchgeführt werden kann.

Erfindungsgemäß kann bei der Simulation bzw. Optimierung eine möglichst flache Topologie des Funknetzwerkes insbesondere im Hinblick auf die Datensammler angestrebt werden. Eine flache Topologie des Funknetzwerkes bedeutet einen Aufbau mit möglichst wenig Hierarchieebenen insbesondere der miteinander kommunizierenden Datensammler. Dies kann erfindungsgemäß dadurch erreicht werden, dass bei der Optimierung für alle Teilnehmergeräte, also beispielsweise Datensammler und/oder Endgeräte, eine kürzeste Verbindung zu dem Master oder ausgezeichneten Datensammler gesucht wird. Der ausgezeichnete Datensammler kann beispielsweise der Datensammler sein, an dem die Ablesung der Verbrauchswerte oder die Weiterleitung an eine Zentrale (Leitstand) stattfindet.

Ferner kann bei der Simulation bzw. Optimierung eine Zuordnung einzelnen Teilnehmergeräte, bspw. der Endgeräte zu einzelnen Datensammlern, erfolgen. Dies kann dadurch erreicht werden, dass der Master den Datensammlern in einer bidirektionalen Kommunikation die Identifikationsnummern der Endgeräte zuteilt, für welche sie zuständig sind. Empfängt ein Datensammler dann das Funktelegramm eines Endgerätes, welches ihm zugewiesen wird, so leitet er das Funktelegramm weiter. Funktelegramme von ihm nicht zugewiesenen Endgeräten werden dagegen ignoriert, wobei in dem Optimierer bzw. Master gegebenenfalls auch eine Umleitungskommunikation eingerichtet werden kann, wenn bestimmte erwartete Verbrauchswerte ausbleiben. Das könnte beispielsweise an eine Unterbrechung der Funkstrecke liegen. Bei einer derartigen Ausgestaltung des vorgeschlagenen Verfahrens können die Endgeräte als unidirektionale Geräte ausgebildet sein. Dies vereinfacht die Gesamttopologie des Funknetzwerks erheblich.

Dabei hat es sich als vorteilhaft herausgestellt, die Endgeräte entsprechend einer aufsteigenden Liste der möglichen Funkstrecken, d.h. der Anzahl der möglichen Kommunikationspartner in dem Funknetzwerk, zuzuordnen. Das heißt, es werden zuerst die Endgeräte mit den wenigsten potentiellen Kommunikationspartnern zugeordnet, weil für diese nur die geringsten Ausweichmöglichkeiten bestehen; die Endgeräte mit den meisten Kommunikationspartnern werden als letztes zugeordnet. Als weiteres Kriterium für die Reihenfolge der Zuordnung kann die Verbindungslast berücksichtigt werden, welche auch als Verbindungskosten bezeichnet wird. Diese berücksichtigt endgeräteabhängig die Häufigkeit und den benötigten Energieaufwand für die Übertragung eines Funktelegramms bis zu dem Master bzw. dem ausgezeichneten Datensammler. Auch hier findet wieder eine aufsteigende Liste Anwendung, wobei das Kriterium der Verbindungslast vorzugsweise aber erst als zweites Sortierkriterium angewendet wird. Gemäß einer bevorzugten Ausführung dieses Optimierungsschritts wird also zunächst eine Liste der Endgeräte in aufsteigender Sortierreihenfolge mit den potentiellen Kommunikationspartnern der einzelnen Teilnehmer gebildet. Wenn verschiedene Endgeräte dieselbe Anzahl gleicher potentieller Kommunikationspartner aufweisen, findet das Kriterium der Verbindungslast Anwendung. Hierdurch wird ein besonders schnell konvergierender Optimierungsvorgang erreicht.

Die vorliegende Erfindung bezieht sich entsprechend auch auf eine Vorrichtung gemäß Anspruch 12 zur Konfiguration eines insbesondere hierarchisch aufgebauten Funknetzwerkes mit Teilnehmergeräten, bspw. Endgeräten und Datensammlern, und einem Mastergerät, wobei die Teilnehmergeräte (einschließlich des Masters) miteinander kommunizieren können. Der Master ist ferner dazu eingerichtet, das Funknetzwerk insgesamt zu organisieren. Um eine Optimierung der Topologie des Funknetzwerkes zu erreichen, ist erfindungsgemäß ein nachfolgend auch als Optimierer bezeichnetes Optimierergerät mit einer Recheneinheit vorgesehen, die insbesondere mittels eines Datenverarbeitungsprogramms dazu eingerichtet ist, von an dem Funknetzwerk beteiligten Teilnehmergeräten, also insbesondere Endgeräten und/oder Datensammlern, Informationen über die Topologie des Funknetzwerkes und die Funklast der einzelnen Teilnehmergeräte zu sammeln. Auf Basis der erhaltenen Informationen über die Topologie des Funknetzwerkes führt der vorzugsweise auch als Optimierer ausgebildete Master oder andere ausgezeichnete Teilnehmer des Funknetzwerkes eine Simulation des Funknetzwerkes, insbesondere dessen Topologie, durch. Ferner kann der beispielsweise auch als Recheneinheit ausgebildete Master insbesondere mittels eines Datenverarbeitungsprogramms dazu eingerichtet sein, das Funknetzwerk abhängig von der Simulation des Funknetzwerkes zu organisieren.

Dabei können der Organisator und/oder der Master zur Durchführung des vorbeschriebenen Verfahrens oder einzelner Schritte des Verfahrens eingerichtet sein, insbesondere auch in der in der nachstehenden Beschreibung von Ausführungsbeispielen beschriebenen Art und Reihenfolge, wobei erfindungsgemäß jedoch nicht sämtliche Verfahrensschritte der besonders bevorzugten Ausführungsformen realisiert werden müssen. Das erfindungsgemäß vorgeschlagene Verfahren kann besonders bevorzugt in der nachbeschriebenen Reihenfolge durchgeführt werden, weil in diesem Zusammenhang eine besonders zeitoptimierte Simulation erreicht wird. Allerdings ist die Erfindung nicht auf die Durchführung des Verfahrens in der nachbeschriebenen Reihenfolge beschränkt. Auch der Aufbau von in ihrer Funktion verschiedenen Endgeräten und Datensammlern ist für die Umsetzung der Erfindung nicht unbedingt notwendig. Insbesondere ist es denkbar, die Funktionen der Endgeräte und der Datensammler in einheitlich aufgebauten Teilnehmergeräten des Funknetzwerkes zu verbinden.

Weitere Vorteile, Merkmale und Anwendungsmöglichkeiten ergeben sich auch aus der nachfolgenden Beschreibung von Ausführungsbeispielen und der Zeichnung.

Es zeigen:
- Fig. 1: schematisch die Topologie eines hierarchisch organisierten Funknetz- werkes;
- Fig. 2: den Zusammenhang zwischen gemessener Empfangsfeldstärke und erforderlicher Leistung in tabellarischer Darstellung;
- Fig. 3: eine Topologie eines Systems mit 20 Datensammlern in tabellarischer Übersicht;
- Fig. 4: die Topologie eines Systems mit 60 Datensammlern in einer tabellari- schen Übersicht;
- Fig. 5: die Topologie eines Systems mit 20 Datensammlern in tabellarischer Übersicht in einer ersten Optimierungsstufe;
- Fig. 6: die Topologie eines Systems mit 20 Datensammlern in tabellarischer Übersicht in einer zweiten Optimierungsstufe und
- Fig. 7: die Topologie eines Systems mit 20 Datensammlern in tabellarischer Übersicht in einer dritten Optimierungsstufe.

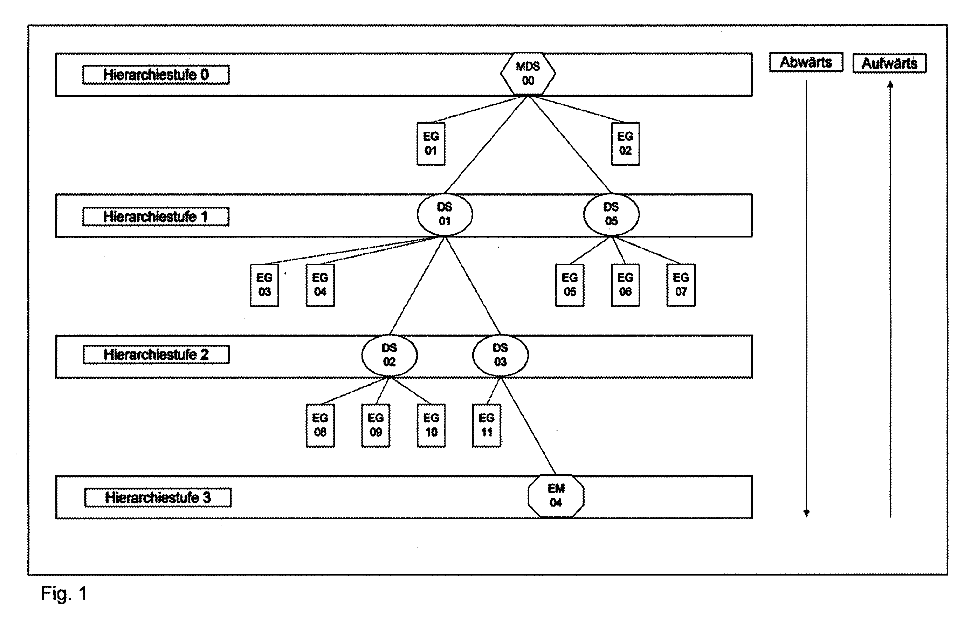

Figur 1 zeigt - in vereinfachter Darstellung - ein hierarchisch aufgebautes, stationäres Funknetzwerk mit insgesamt vier Hierarchiestufen, wobei die oberste Hierarchiestufe 0 durch einen Master (MDS 00) gebildet wird, der ein besonders ausgebildeter Datensammler DS ist und das Funknetzwerk organisiert. Diesem Master MDS 00 sind unmittelbar die Engeräte EG01 und EG02 zugeordnet. In der ersten Hierarchiestufe 1 finden sich die Datensammler DS01 und DS05.

Diesen sind unmittelbar die Endgeräte EG03, EG04 und EG05, EG06,EG07 zugeordnet. Außerdem kommunizieren die Datensammler der ersten Hierarchiestufe mit dem Master MDS und den Datensammlern DS02, DS03 der zweiten Hierarchiestufe 2, denen ihrerseits wieder Endgeräte EG08 bis EG011 zugeordnet sind. Dem Datensammler DS03 aus der dritten Hierarchiestufe 3 ist ferner ein weiterer Datensammler EM04 zugeordnet, der eine Sonderfunktion in dem Verbrauchswerterfassungs-Funknetzwerk übernimmt und einer wärmebedarfsadaptiven Heizungsregelung benötigte Wärmeverbrauchsdaten übermittelt.

Es ist offensichtlich, dass der Datensammler DS01 günstig platziert ist und ihm deshalb viele Messgeräte und weitere Datensammler DS02, DS03, EM04 zugeordnet worden sind. Die Batterie dieses Datensammlers DS01 wird also besonders belastet, weil es die Daten aller ihm zugeordneten Geräte (Endgeräte EG03, EG04 sowie Datensammler DS02, DS03, EM04 mit den diesen zugeordneten Endgeräten) weiterleiten muss. Da der dem Datensammler DS01 untergeordnete Baum bei Ausfall dieser einen Komponente nicht mehr erreichbar ist, ist diese Situation kritisch. Die Batterie dieser Komponente bestimmt damit letztlich die Nutzungsdauer des Gesamtsystems.

Mit dem nachfolgend beschriebenen erfindungsgemäßen Verfahren soll das System so konfiguriert werden, dass die Batterien der kritischen Komponenten möglichst wenig belastet bzw. der Belastung der übrigen Komponenten angeglichen werden.

Dazu soll zum einen eine Minimierung des Strombedarfs im gesamten Netzwerk erfolgen und zum anderen eine Gleichverteilung der Last auf die Komponenten (Teilnehmergeräte) erreicht werden. Diese beiden Zielsetzungen, die erfindungsgemäß vorzugsweise beide gleichzeitig optimiert werden sollen, sind in der Regel jedoch nicht miteinander kompatibel bzw. konkurrierend. Bei einem minimalen Strombedarf des Gesamtnetzes kann es vorkommen, dass einzelne Komponenten (wie hier der Datensammler DS01) sehr stark belastet werden. Daher muss eine ausgewogene Balance zwischen diesen beiden Kriterien gesucht werden.

Hierfür werden nachfolgend zunächst die Möglichkeiten zur Steuerung bzw. Verteilung des Strombedarfs in einem Funknetzwerk genannt, die dem Master bei der Organisation des Funknetzwerkes zur Verfügung stehen. Anschließend wird das Verfahren beschrieben, mit dem eine nahe am Optimum liegende Netzwerktopologie durch eine Art Simulation bestimmt wird, indem die zur Verfügung stehenden Einflussgrößen entsprechend variiert werden.

Die Optimierung ist möglich, da an einer Stelle, d.h. dem Optimierer, der in dem beschriebenen Beispiel mit dem Masterdatensammler MDS zusammenfällt, sämtliche Informationen zum topologischen Aufbau des Funknetzwerkes vorliegen. In der weiteren Beschreibung wird implizit davon ausgegangen, dass der Master und Optimierer MDS auch das Funknetzwerk organisiert. Die Erfindung ist jedoch nicht hierauf beschränkt, da das Funknetzwerk auch von anderer Stelle aus organisiert werden kann, so dass Master MDS und Optimierer nicht in einem Gerät realisiert sind.

Nachfolgend werden nun die durch den Master beeinflussbaren Größen behandelt, die erfindungsgemäß gemeinsam oder jede für sich zur Optimierung des Funknetzwerkes herangezogen werden können.

### 1. Redundanzen

Anders als in Figur 1 schematisch dargstellt, gibt es in realen Funknetzwerken viele redundante Kommunikationswege innerhalb des Funknetzwerkes. Beispielsweise könnte der Datensammler DS03 auch direkt mit dem Master MDS, allerdings mit ungünstigerer Verbindungsqualität, kommunizieren. Auch die Messgeräte (Endgeräte EG) können alternativ von anderen Datensammlern empfangen werden. Beispielsweise könnte das Endgerät EG11 auch von dem Datensammler DS05 verwaltet werden. Die Qualität der Funkstrecken ist von den Ausbreitungsbedingungen vor Ort abhängig. Neben der Entfernung sind hier Hindernisse, z.B. Wände, zwischen dem Kommunikationspartnern zu berücksichtigen. Außerdem spielen Reflexionen und Überlagerungen eine wesentliche Rolle.

Die Qualität der Funkstrecken ist zwar zeitlich nicht unbedingt gleich, aber überwiegend konstant, so dass für die Simulation vorzugsweise von einem zeitlich unveränderlichem Zustand ausgegangen werden kann. Bauliche Änderungen oder sonstige dauerhafte Einflüsse auf die Funkstrecke können im Rahmen einer zyklischen Wiederholung der Simulation berücksichtigt werden. In der Praxis werden bei dem Einrichten derartiger Funknetzwerke Ausstattungsdichten vorgegeben, die für übliche Gebäude ausreichend. Die dafür entwickelten Regeln orientieren sich an kritischen Gebäuden, in denen die Funkstrecken beispielsweise durch dicke Mauern recht stark abgeschirmt werden. Da nicht alle Gebäude derartig kritisch aufgebaut sind, findet man in typischen Gebäuden sehr viele redundant Funkstrecken, die erfindungsgemäß zur Verwaltung und Organisation des Funknetzwerkes ausgenutzt werden können.

### 2. Sendeleistung

Die Datensammler DS gemäß Fig. 1 sind in der Lage, große Entfernungen zu überbrücken. Dazu werden sie mit einem leistungsfähigen Sender, beispielsweise mit einer Sendeleistung von etwa 500 mW, und einem empfindlichen Empfänger ausgestattet. In aller Regel wird diese Leistung innerhalb eines Funknetzwerkes nicht vollständig benötigt, sondern kann reduziert werden. Es könnte sein, dass im Beispiel der stark frequentierte Datensammler DS01 anstelle seiner vollständigen Leistung von beispielsweise 500 mW nur 25 mW zur Kommunikation mit dem Master MDS benötigt, also nur 1/20 seiner maximalen Sendeleistung. In diesem Falle wäre die Weiterleitung der Daten aller in dem Baum untergeordneten Komponenten bzw. Teilnehmern des Funknetzwerkes kein Problem, weil die benötigte Leistung nur ein Bruchteil der Maximalleistung beträgt. Es ist auch aus Gründen der minimierten Störung anderer Systeme und elektromagnetischen Belastung der Umwelt wünschenswert, mit möglichst wenig Sendeleistung auszukommen. Dies kann mit der Erfindung bei der Optimierung des Funknetzwerkes durch Anpassung der Sendeleistung der einzelnen Teilnehmer erreicht werden.

### 3. Batteriekapazität

Die Datensammler DS addieren den Verbrauch aller Aktivitäten, d.h. insbesondere der Funkverbindungen, aber gegebenenfalls auch der Rechenleistung, auf, so dass sie in der Lage sind, eine Prognose zu ihrer verbleibenden Batteriekapazität abzugeben. Diese Information ist zur Optimierung der Netzwerktopologie hoch interessant, da eine leere Batterie eines (zentralen) Teilnehmers des Systems, in Fig. 1 beispielsweise des Datensammlers DS01, das Ende der Nutzungsdauer des Funknetzwerkes bedeutet und einen Serviceeinsatz vor Ort auslöst, um die Batterie zu wechseln bzw. das Teilnehmergerät zu tauschen.

### 4. Endgerätezuordnung

Da die Funkstrecken zwischen mehreren Datensammlern DS und die Funkstrecken zwischen Datensammlern DS und Mess- bzw. Endgeräten EG vielfach redundant vorhanden sind, kann auch die Zuordnung der Messgeräte EG zu den Datensammlern DS und/oder die Weiterleitungskommunikation zwischen den Datensammtern DS untereinander in weiten Grenzen variiert werden.

Bei der Zuordnung wird auch die individuelle Situation des betroffenen Datensammlers DS beachtet. So haben die Datensammler DS einen endlichen Datenspeicher, der die Anzahl zuordenbarer Messgeräte begrenzt. Andererseits verursacht jedes zugeordnete Messgerät EG einen gewissen Strombedarf. Die Zuordnung der Messgeräte muss erfindungsgemäß also so erfolgen, dass die Batterien der Datensammler insgesamt möglichst gleichmäßig belastet werden.

### 5. Wiederholte Anpassung der Topologie

Aufgrund der erhobenen Daten zur Topologie des Funknetzwerkes wird durch die Simulation eine optimale Topologie ermittelt und das Funknetz durch den Master MDS entsprechend konfiguriert. Von Zeit zu Zeit wird diese Optimierung mit neu erhobenen Daten wiederholt. Die Verbrauchsprognosen und andere Annahmen zur Berechnung der Topologie werden nicht exakt der Wirklichkeit entsprechen, so dass durch das Wiederholen der Simulation eine bessere, kontinuierliche Anpassung an die Realität erzielt werden kann. Weiterhin werden dadurch Änderungen der Funkausbreitungsbedingungen im Laufe der Zeit berücksichtigt.

Nachfolgend wird die Ausführung des erfindungsgemäßen Verfahrens anhand eines bevorzugten konkreten Beispiels beschrieben, das eine Optimierung des Funknetzwerkes näherungsweise löst. Bei großen Funknetzwerken ergeben sich sehr viele Konfigurationsmöglichkeiten, so dass die Berechnung aller Variationen nicht möglich ist. Durch eine geschickte Reihenfolge der Optimierungsschritte kann jedoch erreicht werden, dass ein näherungsweise optimaler Zustand erreicht wird.

Es hat sich herausgestellt, dass das erfindungsgemäß vorgeschlagene Verfahren zur Konfiguration des Funknetzwerkes bei Funknetzwerken mit einer Größe von 60 Datensammlern und 2000 Endgeräten (Messgeräten) noch möglich ist, wobei letztere keine prinzipielle obere Grenze für die Durchführung der Erfindung darstellt. Neben dem nachfolgend beschriebenen besonders vorteilhaften Verfahren gibt es auch weitere Möglichkeiten, sich im Rahmen der erfindungsgemäßen Lösung mit einer iterativen Optimierung des Funknetzwerkes einem optimalen Ergebnis anzunähern.

Gemäß einem erfindungsgemäßen Grundsatz bei der Simulation des Funknetzwerkes wird durch den Optimierer eine möglichst flache Topologie angestrebt. Dies bedeutet, dass die Datensammler DS bzw. Endgeräte EG auf möglichst kurzem Wege dem Master MDS zugeordnet werden. Diese Strategie bietet sich an, weil die Datensammler DS der ersten Hierarchie-Ebene unter dem Master MDS ungemein stark belastet werden und es deshalb angeraten ist, eine möglichst flache Hierarchie aufzubauen.

Es hat sich als vorteilhaft erwiesen, im ersten Schritt im Rahmen der Simulation nur das Funknetzwerk zwischen den Datensammlern DS (einschließlich des Masterdatensammlers MDS) zu betrachten. Die End- bzw. Messgeräte EG werden dann in einem zweiten Schritt gleichmäßig auf die Datensammler DS verteilt, wobei jedoch nicht ausschließlich die Anzahl der einem Datensammler zugeordneten Endgeräte EG berücksichtigt wird. Dieses zweistufige Vorgehen reduziert den Rechenaufwand im Rahmen der Simulation drastisch.

Daher werden erfindungsgemäß zunächst alle Datensammler DS in einen Betriebsmodus versetzt, in dem sie selbst Telegramme senden und versuchen, Telegramme aller anderen Datensammler zu empfangen. Bei dem Empfang eines Telegramms wird die Empfangsfeldstärke (RSSI) mit aufgezeichnet.

Als Ergebnis liegt dem Master MDS somit eine Tabelle mit allen erhobenen RSSI-Werten für jeden Kommunikationswert vor. Jeder Datensammler DS hat zumindest eine, in der Regel aber mehrere mögliche Verbindungen zu anderen Datensammlern DS.

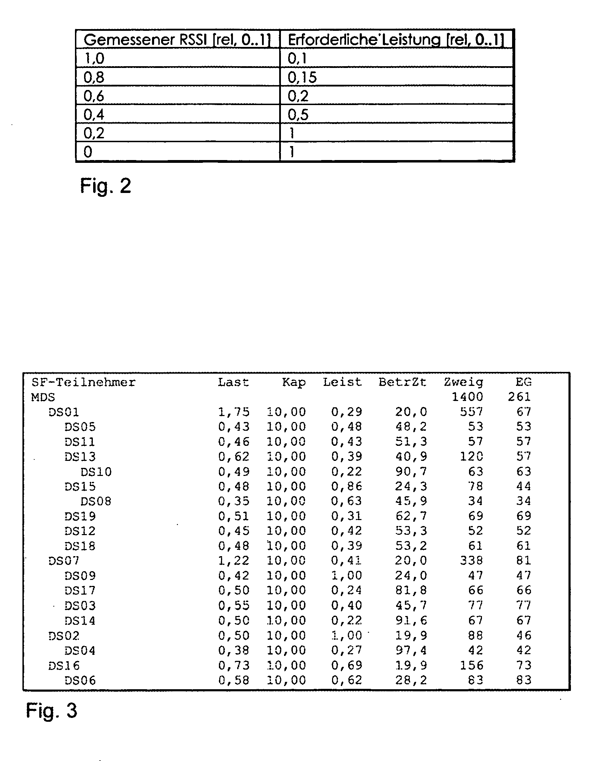

Aus den RSSI-Werten kann in einem weiteren Auswertungsschritt auf die erforderliche Leistung für eine sichere Übertragung geschlossen werden. Mit einer vorbestimmten Funktion wird ermittelt, inwieweit die Ausgangsleistung der Teilnehmer reduziert werden kann. Dieser Zusammenhang zwischen dem RSSI-Wert und der Leistung wird in einer Wertetabelle abgebildet und bei Anwendung gegebenenfalls interpoliert. Beispielhaft sind in Fig. 2 der Zusammenhang zwischen dem gemessenen RSSI-Wert und der erforderlichen Leistung, normiert auf den Zahlenbereich zwischen 0 und 1, dargestellt. Mit Hilfe dieser Tabelle gemäß Fig. 2 werden für alle Funkstrecken die gemessenen Empfangsfeldstärken (RSSI-Werte) in erforderliche Leistungen umgerechnet. Als Ergebnis liegt eine Tabelle mit der für jede Funkverbindung bzw. Funkstrecke erforderlichen Leistung vor.

Ausgehend von diesen für jede Funkstrecke benötigten Leistungen kann die Topologie des Funknetzwerkes festgelegt werden, wobei - wie bereits erläutert - erfindungsgemäß eine möglichst flache Hierarchie angestrebt wird. Es wird davon ausgegangen, dass die Datensammler DS und auch die Endgeräte EG gleichmäßig in der Liegenschaft verteilt sind. Der Funkkorrtakt kann nun direkt zu dem Master MDS erfolgen oder über einen oder mehrere bereits zugeordnete Datensammler DS führen. Für alle noch nicht zugeordneten Datensammler DS wird für sie die kürzeste Verbindung zum Master MDS ermittelt. Hat ein Datensammler DS mehrere Partner der gleichen Hierarchiestufe zur Auswahl, so wird derjenige mit der günstigsten Funkverbindung ausgewählt. Dieser Ablauf wird solange wiederholt (iteriert), bis alle Datensammler DS zugeordnet sind. Dieses Verfahren sorgt für eine möglichst flache und effiziente Topologie des hierarchisch aufgebauten, statischen Funknetzwerkes.

Sobald diese Topologie festgelegt ist, werden die Messgeräte EG anschließend den Datensammlern DS zugeordnet. Grundlage der Zuordnung ist wieder eine Messung der Empfangsfeldstärke, die in Form einer RSSI-Matrix behandelt werden kann. Zum Erheben dieser RSSI-Matrix werden alle Datensammler DS in einen Zustand versetzt, in dem jeder Datensammler DS versucht, alle Messgeräte EG bzw. deren Funktelegramme zu empfangen. Danach übertragen die Datensammler DS sämtliche Informationen über die Empfangswerte an den Master MDS. Diesem liegt dann eine Liste vor, in der alle Funkverbindungen zwischen Datensammlern DS und Endgeräten EG hinsichtlich der Feldstärke bewertet sind.

Für die konkrete Zuordnung der Mess- bzw. Endgeräte EG ist zu berücksichtigen, dass von einem Datensammler verwaltete Messgeräte EG die Batterien der Datensammler DS im Wesentlichen durch zwei Anteile belasten, die gemäß einer bevorzugten Ausführungsform beide im Verfahren berücksichtigt werden.

Zum einen werden die erfassten Daten im vorgesehenen Rhythmus an den Master MDS weitergegeben. Hierbei sind sämtliche Datensammler DS in der Kommunikationskette eingebunden. Diese Komponente belastet die zentralen Datensammler DS besonders, da diese viele Daten weiterleiten müssen.

Zum anderen wird aber auch durch den Empfang der Funktelegramme der Messgeräte EG die Batterie des Datensammlers DS erheblich belastet. Diese Belastung betrifft allerdings nur den Datensammler DS, dem das Messgerät EG zugeordnet ist. Die Belastung ist je nach Applikation, Messgerätetyp und Technologie unterschiedlich. Bei dieser Stromkomponente kann ein gewisser Ausgleich geschaffen werden, indem die Kommunikation zu den Messgeräten EG eher den peripheren Datensammlern DG zugewiesen wird. Die zentralen Datensammler DS leiten dann die Daten überwiegend "nur weiter".

Die Zuordnung erfolgt dabei nach dem Prinzip "die Schwierigsten zuerst". Es werden also zunächst die Messgeräte EG zugeordnet, die nur wenige potentielle Kommunikationspartner haben und eine hohe Last verursachen. Wieder wird für jede mögliche Funkverbindung die Belastung für alle Datensammler DS ermittelt und letztendlich dem Datensammler DS zugeordnet, dessen Batterie bisher am geringsten belastet ist. Dies werden aus den oben bereits erwähnten Gründen überwiegend die peripheren Datensammler DS sein. Die Geräte dagegen, die eine hohe Last verursachen, werden bei gleicher Anzahl von Verbindungsmöglichkeiten bevorzugt zugeordnet. Danach werden Endgeräte EG mit mehr Verbindungsmöglichkeiten betrachtet, so lange bis alle zugeordnet sind.

Bei der Berechnung der Verbindungslast, die auch als Verbindungskosten bezeichnet wird, werden die individuellen, applikationsspezifischen Lasten für Direktempfang und Weiterleitung berücksichtigt. Ein Endgerät EG, dessen Messwert einmal pro Stunde übertragen werden muss, belastet das System wesentlich stärker als ein Endgerät EG, das einmal täglich abgelesen wird und nur in diesem Zeitabstand ein Funktelegramm aussendet.

Das Verfahren ist sowohl mit unidirektionalen als auch mit bidirektional kommunizierenden Endgeräten EG möglich. Es spielt auch keine Rolle, ob die Endgeräte EG synchron oder asynchron empfangen werden: Dadurch ändern sich lediglich die Zahlenwerte für die Belastungsgrößen.

Zur Berechnung der Verbindungslast (Verbindungskosten) wird für jeden möglichen Datensammler DS ermittelt, zu welchen Lasten er die Daten entlang des Übertragungswegs bis zum Master MDS übermitteln kann. Es wird also jeweils der gesamte Ast des Übertragungswegs in dem Baum des Funknetzwerks betrachtet. Das Endgerät EG wird dann dem Datensammler DS zugeordnet, welcher - bezogen auf den gesamten Übertragungsweg - die meisten Reserven, d.h. die höchste prognostizierte Betriebszeit bzw. Batteriekapazität hat. Dabei wird auch der zur Verfügung stehende Speicherplatz des Datensammlers DS bzw. der in dem Kommunikationsweg bis zu dem Master liegenden Datensammler DS berücksichtigt.

Dieses vorbeschriebene Verfahren wird zum Beispiel einmal pro Jahr zyklisch wiederholt.

Die Funktionsweise des beschriebenen Verfahrens wurde in einer Praxissimulation untersucht, deren Ergebnisse nachfolgend dargestellt werden. Insgesamt wurden Systeme zwischen 5 bis 60 Datensammlern DS und 350 bis 4.200 Endgeräten EG untersucht.

Fig. 3 zeigt die Topologie eines Systems mit 20 Datensammlern, deren Batteriekapazität jeweils maximal ist. In der Tabelle bedeutet "SF-Teilnehmer" Datensammler DS, die entsprechend der Hierarchieebene eingerückt sind. Mit "Last" wird die Kommunikationslast beschrieben, die bei voller Sendeleistung den Stromverbrauch pro Jahr in der Einheit Ah angibt. "Kap" bezeichnet die aktuelle (Rest-)Kapazität der Batterie in der Einheit Ah. Mit "Leist" wird die Leistung der Endstufe proportional den Strombedarf, 1.0 = volle Leistung, angegeben. Die Größe "BetrZt" gibt die erwartete Betriebszeit des Datensammlers an, die sich aus der Restkapazität der Batterie und der Kommunikationslast pro Jahr ergibt. In der Spalte "Zweig" sind die Anzahl der Endgeräte in Zweig unterhalb des Datensammlers zuzüglich dem diesen Datensammler selbst zugeordneten Endgeräte angegeben. Die Spalte "EG" gibt die Anzahl der direkt diesem Datensammler zugeordneten Endgeräte an.

Wie Fig. 3 erwartungsgemäß zeigt, sind die Datensammler DS01, DS07, DS02, DS16 der ersten Hierarchieebene sehr stark belastet. Durch das Verfahren wird - bei ausreichend redundanten Funkstrecken - eine gleichmäßige Belastung der Datensammter DS erreicht. Hierdurch ist die minimale Lebensdauer in diesem Beispiel auf etwa 20 Jahre begrenzt.

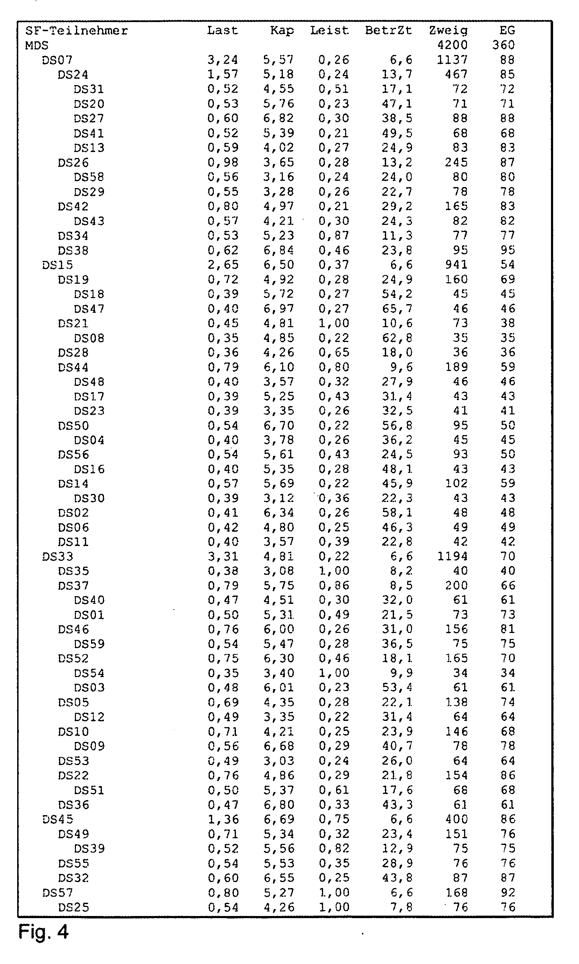

Bei der Berechnung der Topologie des Funknetzwerkes werden unterschiedlich entladene Batterien der einzelnen Komponenten berücksichtigt. Trotz der unterschiedlichen Ladungszustände werden, wie im nachfolgenden Beispiel anhand von Fig. 4 dargestellt, für die am stärksten belasteten Datensammler identische erwartete Betriebszeiten ermittelt wie für geringer belastete Datensammler. Die Topologie des Funknetzwerkes stellt sich wie vorgesehen auf das Leistungsvermögen der einzelnen Datensammler DS ein.

Fig. 4 zeigt einen Aufbau des Funknetzwerkes mit 60 Datensammlern, die Informationen von 4.200 Endgeräten EG weiterleiten. Die Datensammler DS mit direkter Verbindung zum Master MDS sind erfindungsgemäß sehr stark belastet. Der größte Zweig fasst nahezu 1.200 Endgeräte EG, der kleinste gerade noch 168 Endgeräte EG. Mit im Mittel zur Hälfte entladener Batterie prognostiziert das Modell eine Lebensdauer von immerhin noch 6,6 Jahren.

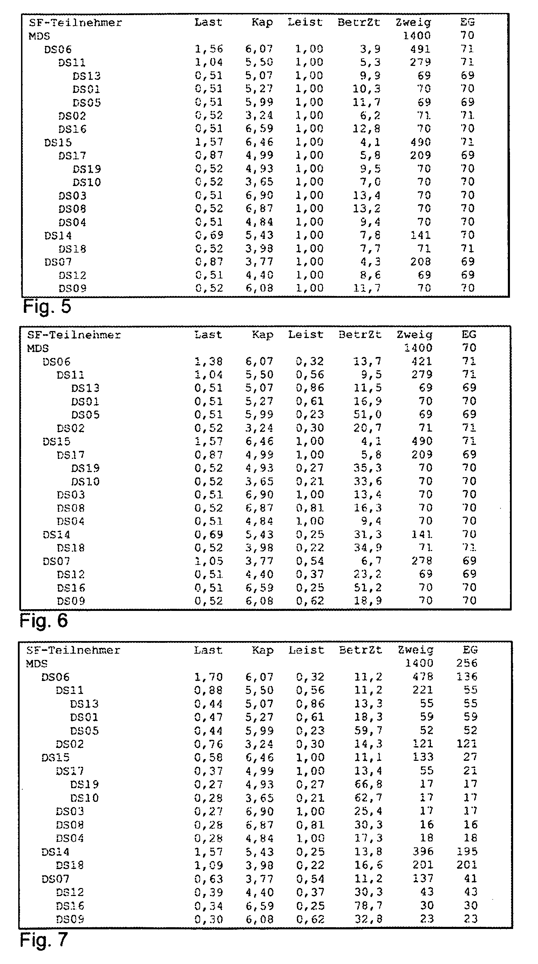

Nachfolgend wird anhand der Figur 5 bis 7 ein Funknetzwerk mit 20 Datensammlern simuliert, wobei der Erfolg der einzelnen Optimierungsstufen dargestellt wird. Der Zustand der Geräte, des Funknetzwerkes und der Funkstrecken sind jeweils identisch. Die Batterien der Datensammler DS sind etwa zur Hälfte entladen.

Bei einer in der ersten Stufe dargestellten Optimierung sind die Endgeräte EG gleichmäßig auf die Datensammler DS verteilt. Außerdem arbeitet jeder Datensammler DS mit voller Leistung. Wie Fig. 5 zeigt, ist die Batterie des Datensammlers DS06 bereits nach 3,9 Jahren erschöpft.

Bei einer identischen Ausgangskonstellation zeigt eine zweite Stufe der Optimierung erfindungsgemäß eine Anpassung der Sendeleistung der Datensammler DS an den jeweiligen Bedarf. Die verfügbare Betriebsdauer beträgt jetzt bei dem Datensammler DS06 bereits jetzt sehr gute 13,7 Jahre. Der Datensammler DS15 ist allerdings schon nach 4,1 Jahren nicht mehr betriebsbereit. Er konnte seine Leistung nicht reduzieren und bleibt deshalb stark belastet. Diese einfache Optimierungsstufe kann ohne Kenntnis des gesamten Netzwerkes ausgeführt werden. Fig. 6 fasst die Ergebnisse zusammen.

In einer weiteren Optimierungsstufe gemäß Fig. 7 werden die Endgeräte EG in Anhängigkeit von der zur Verfügung stehenden Betriebsdauer der Datensammler DS verteilt. Bei der Auswahl der Funkstrecke wird diejenige ausgewählt, welche die geringste Belastung für den Datensammler DS mit sich bringt. Dadurch weicht das System auf leistungsfähigere Datensammler DS aus. Die Lebensdauer der Datensammler DS ist im Beispiel jetzt immer größer als 11 Jahre. Die vier am stärksten belasteten Geräte liegen trotz sehr unterschiedlicher Batterieentladung in der Betriebsdauer sehr dicht zusammen.

Das erfindungsgemäß vorbeschriebene Verfahren bzw. die Vorrichtung zu seiner Durchführung nutzen das vorhandene Wissen über Applikationen, Funkverbindungen und verfügbare Batteriekapazitäten in dem Funknetzwerk aus, um dieses zu optimieren. Das Verhalten des Funknetzwerks wird durch eine Simulation prognostiziert und bereits vorab auf die erwartete Last angepasst. Durch die vorgestellten Maßnahmen ist es möglich, die Batterien der beteiligten Komponenten optimal zu nutzen. Durch das Wissen über das System ist der Betreiber jederzeit aussagefähig, wie lange das Netz noch funktionieren wird und wann Serviceeinsätze bevorstehen. Das Verhalten des Funknetzwerkes und der teilnehmenden Komponenten (Teilnehmergeräte) ist somit deterministisch.

Bisher wurden die Batterien der Datensammler generell für den ungünstigsten Fall ausgelegt. Durch das vorgeschlagene Verfahren kann die Last insgesamt besser verteilt werden. Im Mittel sind dadurch drastische Einsparungen bei Batterien, Geld und auch Umweltressourcen möglich. Es ist auch denkbar, dass nur bei einigen Komponenten vorsorgehalber Batterien getauscht werden, wenn die restlichen Komponenten möglicherweise noch genügend Reserve haben, um eine weitere Serviceperiode zu überstehen.

Auch wenn das Verfahren und die Vorrichtung vorstehend im Zusammenhang mit der besonders bevorzugten Verbrauchswertdatenerfassung beschrieben wurde, ist die Erfindung nicht auf dieses Anwendungsgebiet beschränkt, sondern kann auch in anderen Bereichen, wie beispielsweise der Hausautomation eingesetzt werden. Auch dynamische Änderungen in den Funknetzwerken lassen sich berücksichtigen, indem eine neue Simulation automatisch durchgeführt wird.

## Patentansprüche

1. Verfahren zur Konfiguration eines Funknetzwerkes, in dem in das Funknetzwerk integrierte Teilnehmergeräte (MDS, DS) miteinander kommunizieren und das Funknetzwerk durch ein Mastergerät (MDS) organisiert wird, wobei in einem Optimierergerät (MDS) von an dem Funknetzwerk beteiligten Teilnehmergeräten (MDS, DS) Informationen über die Topologie des Funknetzwerkes und die Funklast der einzelnen Teilnehmergeräte (MDS, DS) gesammelt werden, auf Basis dieser Informationen durch das Optimierergerät (MDS) eine Simulation des Funknetzwerkes durchgeführt wird und das Funknetzwerk abhängig von dem Ergebnis der Simulation des Funknetzwerkes durch das Mastergerät (MDS) organisiert wird, **dadurch gekennzeichnet, dass** durch die Simulation des Funknetzwerkes eine Voraussage der Betriebsdauer der einzelnen Teilnehmergeräte ermittelt wird.

2. Verfahren nach Anspruch 1, **dadurch gekennzeichnet, dass** als Maß für die Funklast eines Teilnehmergeräts (MDS, DS) die Anzahl und Länge der einzelnen Funkübertragungen, die benötige Sendeleistung und die Qualität der Funkstrecken verwendet werden.

3. Verfahren nach Anspruch 1 oder 2, **dadurch gekennzeichnet, dass** das Funknetzwerk bei der Simulation im Hinblick auf eine Minimierung des Strombedarfs im gesamten Funknetzwerk und/oder auf eine Gleichverteilung der Funklast auf Teilnehmergeräte (MDS, DS) optimiert wird.

4. Verfahren nach einem der vorhergehenden Ansprüche, **dadurch gekennzeichnet, dass** bei der Simulation des Funknetzwerkes die zur Organisation zur Verfügung stehenden Einflussgrößen variiert werden und die Funklast der einzelnen Teilnehmergeräte (MDS, DS) ermittelt wird.

5. Verfahren nach Anspruch 4, **dadurch gekennzeichnet, dass** die variierten Einflussgrößen das Ausnutzen redundanter Kommunikationswege, eine Variation der Sendeleistung, eine Variation der Zuordnung der verschiedenen Teilnehmergeräte (MDS, DS) und/oder der Aufbau einer Hierarchie des Funknetzwerkes sind.

6. Verfahren nach einem der vorhergehenden Ansprüche, **dadurch gekennzeichnet, dass** die Simulation in vorgebbaren Zeitabständen wiederholt wird.

7. Verfahren nach einem der vorhergehenden Ansprüche, **dadurch gekennzeichnet, dass** zur Durchführung der Simulation alle Teilnehmergeräte (MDS, DS) in den Betriebsmodus versetzt werden und die Empfangsfeldstärke der empfangenen Funktelegramme gemessen wird.

8. Verfahren nach einem der vorhergehenden Ansprüche, **dadurch gekennzeichnet, dass** bei der Simulation die für jede Funkstrecke zwischen zwei Teilnehmern (MDS, DS) des Funknetzwerkes erforderliche Sendeleistung berechnet und in eine Tabelle eingetragen wird.

9. Verfahren nach einem der vorhergehenden Ansprüche, **dadurch gekennzeichnet, dass** bei der Simulation eine möglichst flache Topologie angestrebt wird, indem für alle Teilnehmergeräte (MDS, DS) eine kürzeste Verbindung zu dem Mastergerät (MDS) oder einem ausgezeichneten Datensammler gesucht wird.

10. Verfahren nach einem der vorhergehenden Ansprüche, **dadurch gekennzeichnet, dass** bei der Simulation Teilnehmergeräte (MDS, DS) entsprechend einer aufsteigenden Liste mit der Anzahl der möglichen Funkstrecken einander zugeordnet werden.

11. Verfahren nach Anspruch 10, **dadurch gekennzeichnet, dass** als weiteres, nachgeordnetes Kriterium bei der Zuordnung der Teilnehmergeräte (MDS, DS) eine aufsteigende Liste der Verbindungslast dient, welche die Häufigkeit und den benötigten Energieaufwand für die Übertragung eines Funktelegramms zu dem Mastergerät (MDS) oder einem ausgezeichneten Datensammler berücksichtigt.

12. Vorrichtung zur Konfiguration eines Funknetzwerkes, mit Teilnehmergeräten (MDS, DS) und einem Mastergerät (MDS), wobei die Teilnehmergeräte (MDS, DS) miteinander kommunizieren und das Mastergerät (MDS) dazu eingerichtet ist, das Funknetzwerk zu organisieren, wobei ein Optimierergerät (MDS) mit einer Recheneinheit vorgesehen ist, welche dazu eingerichtet ist, von an dem Funknetzwerk beteiligten Teilnehmergeräten Informationen über die Topologie des Funknetzwerkes und die Funklast der einzelnen Teilnehmergeräte (MDS, DS) zu sammeln und auf Basis dieser Informationen eine Simulation des Funknetzwerkes durchzuführen, und wobei das Mastergerät (MDS) dazu eingerichtet ist, das Funknetzwerk abhängig von dem Ergebnis der Simulation des Funknetzwerkes zu organisieren, **dadurch gekennzeichnet, dass** die Recheneinheit dazu eingerichtet ist, bei der Simulation des Funknetzwerkes eine Voraussage der Betriebsdauer der einzelnen Teilnehmergeräte (MDS, DS) zu ermitteln.

## Claims

1. Method for configuring a radio network, in which subscriber devices (MDS, DS) integrated into the radio network communicate with one another and the radio network is organised by a master device (MDS), information about the topology of the radio network and the radio load of the individual subscriber devices (MDS, DS) being collected from subscriber devices (MDS, DS) participating in the radio network in an optimisation device (MDS), on the basis of which information a simulation of the radio network is carried out by the optimisation device (MDS) and the radio network being organised by the master device (MDS) in accordance with the result of the simulation of the radio network, **characterized in that** by means of the simulation of the radio network, a prediction of the operating period of the individual subscriber devices (MDS, DS) is determined.

2. The method according to Claim 1, **characterized in that** the number and length of the individual radio transmissions, the required transmission power and the quality of the radio links are used as a measure for the radio load of a subscriber device (MDS, DS).

3. The method according to Claim 1 or 2, **characterized in that** in the simulation the radio network is optimised with regard to minimising the power requirements in the overall radio network and/or to a uniform distribution of the radio load over subscriber devices (MDS, DS).

4. The method according to one of the preceding Claims, **characterized in that** in the simulation of the radio network the influencing variables available for the organisation are varied and the radio load of the individual subscriber devices (MDS, DS) is determined.

5. The method according to Claim 4, **characterized in that** the varied influencing variables are the usage of redundant communication paths, a variation of the transmission power, a variation of the assignment of the different subscriber devices (MDS, DS), and/or the structure of a hierarchy of the radio network.

6. The method according to one of the preceding Claims, **characterized in that** the simulation is repeated at predefinable time intervals.

7. The method according to one of the preceding Claims, **characterized in that** to carry out the simulation all subscriber devices (MDS, DS) are set into the operating mode and the received field strength of the received radio telegrams is measured.

8. The method according to one of the preceding Claims, **characterized in that** in the simulation the transmission power required for each radio link between two subscribers (MDS, DS) of the radio network is calculated and entered into a table.

9. The method according to one of the preceding Claims, **characterized in that** in the simulation a maximally flat topology is aimed for, by a shortest connection to the master device (MDS) or to an assigned data collector being sought for all subscriber devices (MDS, DS).

10. The method according to one of the preceding Claims, **characterized in that** in the simulation subscriber devices (MDS, DS) are assigned to one another according to an ascending list with the number of possible radio links.

11. The method according to Claim 10, **characterized in that** as a further, subordinate criterion in the assignment of the subscriber devices (MDS, DS), an ascending list of the connection load is used, which takes into account the frequency and the required energy expenditure for the transmission of a radio telegram to the master device (MDS) or to an assigned data collector.

12. Device for configuring a radio network, having subscriber devices (MDS, DS) and a master device (MDS), the subscriber devices (MDS, DS) communicating with one another and the master device (MDS) being designed to organise the radio network, and an optimisation device (MDS) being provided with an arithmetic unit which is designed to collect information about the topology of the radio network and the radio load of the individual subscriber devices (MDS, DS) from subscriber devices (MDS, DS) participating in the radio network and to carry out a simulation of the radio network on the basis of this information, and the master device (MDS) being designed to organise the radio network in accordance with the result of the simulation of the radio network, **characterized in that** the arithmetic unit is designed to determine a prediction of the operating period of the individual subscriber devices (MDS, DS) during the simulation of the radio network.

## Revendications

1. Procédé de configuration d'un réseau radio, dans lequel des appareils participants (MDS, DS) intégrés au réseau radio communiquent les uns avec les autres et le réseau radio est organisé par un appareil maître (MDS), moyennant quoi dans un appareil d'optimisation (MDS) des informations des appareils participants (MDS, DS) impliqués dans le réseau radio relatives à la topologie du réseau radio et la charge radio des appareils participants individuels (MDS, DS)sont collectées, sur la base de ces informations une simulation du réseau radio est effectuée par l'appareil d'optimisation (MDS) et le réseau radio est organisé en fonction du résultat de la simulation du réseau radio par l'appareil maître (MDS), **caractérisé en ce que** une prévision de la durée de fonctionnement des appareils participants individuels est déterminée d'après la simulation du réseau radio.

2. Procédé selon la revendication 1, **caractérisé en ce que** comme étalon de la charge radio d'un appareil participant (MDS, DS), on utilise le nombre et la longueur des transmissions radio individuelles, la puissance d'émission requise et la qualité des voies radio.

3. Procédé selon la revendication 1 ou 2, **caractérisé en ce que** le réseau radio est optimisé lors de la simulation en ce qui concerne une minimisation du besoin en alimentation électrique sur la totalité du réseau radio et/ou une répartition uniforme de la charge radio sur les appareils participants (MDS, DS).

4. Procédé selon une des revendications précédentes, **caractérisé en ce que** lors de la simulation du réseau radio, les grandeurs influentes disponibles à des fins d'organisation sont variées et la charge radio des appareils participants individuels (MDS, DS) est déterminée.

5. Procédé selon la revendication 4, **caractérisé en ce que** les grandeurs influentes variées sont l'exploitation d voies de communication redondantes, une variation de la puissance d'émission, une variation de l'affectation des différents appareils participants (MDS, DS) et/ou la structure d'une hiérarchie du réseau radio.

6. Procédé selon une des revendications précédentes, **caractérisé en ce que** la simulation est répétée à des intervalles de temps prescrits.

7. Procédé selon une des revendications précédentes, **caractérisé en ce que** pour mettre en oeuvre la simulation tous les appareils participants (MDS, DS) sont décalés en mode de fonctionnement et l'intensité de champ de réception des télégrammes radio reçus est mesurée.

8. Procédé selon une des revendications précédentes, **caractérisé en ce que** lors de la simulation, la puissance d'émission requise pour chaque voie radio entre deux participants (MDS, DS) du réseau radio est calculée et entrée dans un tableau.

9. Procédé selon une des revendications précédentes, **caractérisé en ce que** lors de la simulation, on vise à obtenir une topologie la plus plate possible, en recherchant pour tous les appareils participants (MDS, DS) une liaison la plus courte à l'appareil maître (MDS) ou un collecteur de données désigné.

10. Procédé selon une des revendications précédentes, **caractérisé en ce que** lors de la simulation, des appareils participants (MDS, DS) sont affectés de manière correspondante à une liste ascendante avec le nombre des voies radio possibles.

11. Procédé selon la revendication 10, **caractérisé en ce que** une liste ascendante de la charge de liaison sert de critère supplémentaire, sous-jacent lors de l'affectation des appareils participants (MDS, DS), laquelle prend en compte la fréquence et la dépense énergétique requise pour la transmission d'un télégramme radio à l'appareil maître (MDS) ou à un collecteur de données désigné.

12. Dispositif de configuration d'un réseau radio, comportant des appareils participants (MDS, DS) et un appareil maître (MDS), dans lequel les appareils participants (MDS, DS) communiquent les uns avec les autres et l'appareil maître (MDS) est conçu afin d'organiser le réseau radio, dans lequel un appareil d'optimisation (MDS) est pourvu d'une unité informatique, qui est conçue afin de collecter les informations des appareils participants impliqués dans le réseau relatives à la topologie du réseau radio et la charge radio des appareils participants (MDS, DS) individuels et effectuer sur la base de ces informations une simulation du réseau radio, et dans lequel l'appareil maître (MDS) est conçu afin d'organiser le réseau radio en fonction du résultat de la simulation du réseau radio, **caractérisé en ce que** l'unité informatique est conçue afin de déterminer lors de la simulation du réseau radio une prévision de la durée de fonctionnement des appareils participants individuels (MDS, DS)
